# EUROPÄISCHE PATENTSCHRIFT

(11) **EP 3 928 919 B1**
(45) Veröffentlichungstag und Bekanntmachung des Hinweises auf die Patenterteilung: **22.05.2024**
(21) Anmeldenummer: 20182571.8
(22) Anmeldetag: 26.06.2020
(51) Int. Cl.: B23K 37/053

(54) **SPANNVORRICHTUNG FÜR LÄNGSNAHTVERSCHWEISSTE ROHRSCHÜSSE**
CLAMPING DEVICE FOR LONGITUDINALLY WELDED PIPE LENGTHS
DISPOSITIF DE SERRAGE POUR SEGMENTS DE TUBE À SOUDURE LONGITUDINALE

(43) Veröffentlichungstag der Anmeldung: 29.12.2021
(73) Patentinhaber: EEW Special Pipe Constructions GmbH, 18147 Rostock (DE)
(72) Erfinder: WOZEL, Martin, 18184 Pastow (DE); SITZ, Ulrich, 18119 Warnemünde (DE)
(74) Vertreter: Patentanwälte Olbricht Buchhold Keulertz

(56) Entgegenhaltungen:
- CN-A- 110 076 516
- DE-A1- 2 806 185
- US-A- 4 152 573

## Beschreibung

Die Erfindung betrifft eine Spannvorrichtung für längsnahtverschweißte Rohrschüsse.

Längsnahtgeschweißte Großrohre, insbesondere aus Stahlblechen, mit einem erheblichen Durchmesser finden beispielsweise in der Erdölindustrie oder bei der Herstellung von großen Bauwerken aus Metall Anwendung. Ein wichtiges Einsatzgebiet ist auch der Fundamentbau für Offshore-Anlagen, insbesondere Windkraftanlagen. Für Großrohre, die im Offshorebereich eingesetzt werden, z.B. als Monopiles oder Tripode, sind Rohrdurchmesser von größer 5 m und mittlerweile größer als 7 m keine Seltenheit mehr.

Längsnahtverschweißte Großrohrschüsse werden aus Stahlblechtafeln hergestellt. Der Blechtafelzuschnitt wird zunächst rundgebogen, die offenen Kanten des so entstandenen geschlitzten Rohrschusses werden mit einer provisorischen Naht zusammengeheftet (Heftschweißen), welche später in Produktionsprozess wieder entfernt wird. Der Aufwand für das Schweißen und Entfernen der Heftnaht sollte möglichst gering sein, um einen hohen Durchsatz zu gewährleisten. Die Heftnaht soll verhindern, dass der heftgeschweißte Rohrschuss beim Transport auseinanderbricht, was bei einem insbesondere schweren, im Durchmesser und Wanddicke großen Rohr aufgrund der erheblichen Masse, die bewegt wird, eine Gefahr darstellt. Der heftgeschweißte Rohrschuss wird am Schweißplatz positioniert und zunächst die Innennaht und dann die Außennaht am Rohrschuss angebracht.

US 4,152 573 A schlägt beispielsweise ein Verfahren zur Fertigung eines Behälters aus Blattmetall vor, bei dem ein Metallblatt zu einem Rohr geformt wird. Aus DE 28 06 185 A1 ist eine Schweißmaschine bekannt, bei der in einer Einspannrichtung gehaltene Werkstücke miteinander verschweißt werden. Gleiches gilt für CN 110076516 A, die ebenfalls eine Einspannvorrichtung für Werkstücke aus Blattmetall vorschlägt.

Aus WO 2014/001408 A1 ist eine Anlage zum Heftschweißen von längsnahtgeschweißten Rohren aus Blechtafeln bekannt. Für die Herstellung eines Großrohres sind mehrere aufeinanderfolgende Arbeitsschritte beschrieben. Die Blechtafel wird nach der Schweißnahtvorbereitung mittels Fräsen, zunächst an den Längskanten vorgebogen. Die vorgebogene Blechtafel wird in eine Rohrformpresse platziert und dort in die gewünschte Form gebogen, bis die Blechtafel zu dem Schlitzrohr umgeformt wurde. Die Längsnaht des Schlitzrohrs wird anschließend durch Schweißen geheftet und in einem separaten Arbeitsgang zu dem fertigen längsnahtgeschweißten Rohrschuss verschweißt.

Aufgrund eines Tragsicherheitsnachweises müssen gegebenenfalls für den sicheren Transport von Rohrschüssen ab einem Durchmesser 6 m zusätzlich zur Heftnaht Hilfsverbinder (Knaggen) in die Rohrschüsse eingeschweißt werden. Die Hilfsverbinder sollen die Heftnaht unterstützen und im Falle des Versagens der Heftnaht den Rohrschuss zusammenhalten. Das Anbringen der Hilfsverbinder vor dem Schweißvorgang und das Entfernen der Hilfsverbinder nach dem Schweißvorgang bedeutet einen hohen zeitlichen Aufwand, der die Produktivität stark verringert. Bei aufwendigen Projekten ist eine termingerechte Fertigstellung entsprechend mit höherem Aufwand verbunden. Teilweise ist das Anbringen von Hilfsverbindern nicht möglich, da die Schweißung der Hilfsverbinder zu Gefügeänderungen im Rohrmaterial führen kann. Aufgabe der Erfindung ist es eine Vorrichtung zur Verbindung der Enden eines offenen Rohschusses bereitzustellen, der die genannten Nachteile überwindet und es insbesondere ermöglicht, schwere und im Durchmesser große Rohre für die Längsnahtverschweißung vorzubereiten mit hoher Sicherheit, hoher Reproduzierbarkeit und geringen Kosten.

Hauptmerkmale der Erfindung sind im Anspruch 1 angegeben. Weitere Ausführungsformen sind Gegenstand der Unteransprüche oder nachfolgend beschrieben.

Die erfindungsgemäße Spannvorrichtung zur temporären Verbindung von zwei Enden eines Großrohrschusses weist mindestens zwei Verbindungsvorrichtungen und eine starre Verbindungsstange auf. Die Verbindungsvorrichtungen sind an den Enden der Verbindungsstange angeordnet. Die Verbindungsvorrichtung ist erfindungsgemäß eine Klemmvorrichtung. Die Klemmvorrichtung weist auf
- ein Grundgestell,
- ein Gelenk, das Grundgestell und Verbindungsstange verbindet,
- mindestens zwei einander gegenüberliegende Klemmbacken, die unterhalb des Gelenks angeordnet sind, wobei jede Klemmbacke eine Klemmfläche aufweist, die im geschlossenen Zustand der Spannvorrichtung am Rohrschuss anliegt,
- mindestens ein Klemmelement an einer Klemmbacke, das einen Verstellmechanismus zur Veränderung der Position aufweist, so dass das Klemmelement verstellbar ist.

Das Klemmelement weist im Klemmbereich zumindest teilweise eine Klemmfläche auf, die zumindest teilweise eine gewölbte oder ebene Form hat. Die Klemmfläche bildet auch die Auflagefläche, mit der die Klemmvorrichtung auf den Flächen des Rohrschusses aufliegt und über die der Kontakt und die Verbindung zwischen erfindungsgemäßer Spannvorrichtung und Stahlplatte des Rohrschusses hergestellt wird. An den beiden Enden der Verbindungsstange ist jeweils mindestens eine Klemmvorrichtung gelenkig gelagert. Die Klemmvorrichtungen sind jeweils so ausgerichtet, dass die Öffnungen zweier verschiedener Klemmvorrichtungen zwischen den Klemmbacken in die gleiche Richtung zeigen und die Öffnungen zweier verschiedener Klemmvorrichtungen auf der gleichen Seite der Verbindungsstange positioniert sind. Bevorzugt weist die erfindungsgemäße Spannvorrichtung zwei Klemmvorrichtungen auf.

Die Begriffe oben und unten sind relativ zu verstehen und dienen nur der Veranschaulichung in der Beschreibung. Oben und unten beziehen sich auf eine Position der erfindungsgemäßen Spannvorrichtung, bei der die Spannvorrichtung nicht eingebaut ist, sondern z.B. auf dem Boden liegt und bei der die Verbindungsstange vertikal gesehen über den Klemmvorrichtungen angeordnet ist. Im eingebauten Zustand hängt oben und unten von der Position der Spannvorrichtung am Rohrschuss ab.

Das Gelenk am Grundgestell, das Grundgestell und Verbindungsstange verbindet, ist bevorzugt ein Drehgelenk, wobei die Verbindungsstange bevorzugt eine Gelenkaufnahme aufweist und die Gelenkachse mit einer Befestigungsvorrichtung am Grundgestell angeordnet ist, wobei die Gelenkachse senkrecht zur Verbindungsstange verläuft. Die Gelenkachse ist beispielweise als Bolzen oder Stab ausgeführt. Durch die Gelenke sind die Klemmvorrichtungen in ihrer Neigung zueinander einstellbar. Die erfindungsgemäße Spannvorrichtung wird durch Bewegung der Klemmvorrichtung im Gelenk an den Durchmesser des Rohrschusses anpasst. Entsprechend kann die erfindungsgemäße Spannvorrichtung für Rohrschüsse verschiedener Durchmesser verwendet werden.

Bevorzugt weist die Klemmvorrichtung eine obere und eine untere Klemmbacke auf. Der Querschnitt dieser Klemmvorrichtung ist C-Förmig, wobei die beiden Klemmbacken das obere und untere Ende des C bilden, oder U-Profil-förmig, wobei die beiden Klemmbacken die beiden Schenkel des U bilden. Der Grundkörper weist bevorzugt eine Verstärkungsrippe auf, die die Oberseite des Grundkörpers mit daran angeordneter oberer Klemmbacke, die Rückseite des Grundkörpers mit ggf. zusätzlich nach innen gerichteter, verstärkter Rückwand und Aufnahme für die untere Klemmbacke bildet. Die Verstärkungsrippe ist bevorzugt C-förmig oder u-Profilförmig ausgebildet.

Die obere Klemmbacke ist bevorzugt Teil des Grundgestells und starr mit diesem verbunden. Alternativ oder zusätzlich ist bevorzugt mindestens ein Klemmelement in der unteren Klemmbacke angeordnet.

In einer Ausführungsform ist das Klemmelement ein Schraubstift mit Klemmplatte, wobei die Klemmplatte eine gebogene Platte mit kreisabschnittförmigem Querschnitt, eine konvexe Platte, eine gewölbte Platte, eine gewellte Platte, eine Platte, die mehrere Erhebungen aus der Ebene heraus hat oder eine ebene Platte ist. Bei einer gebogenen Platte verläuft die Zylinderachse senkrecht zur Verbindungsstange und parallel zur Mittelachse des Rohrschusses. Durch die Form der Klemmflächen liegt die erfindungsgemäße Spannvorrichtung immer tangential am Rohrschuss an. Die Verwendung von Schrauben erlaubt eine hohe Klemmkraft bei kompakter Bauform.

Bevorzugt hat die Klemmfläche zumindest teilweise eine strukturierte Oberfläche, besonders bevorzugt hat die gesamte Klemmfläche eine strukturierte Oberfläche. In einer Ausführungsform besteht die strukturierte Oberfläche aus dem gleichen Material wie die Klemmplatte und ist eine aufgeraute Fläche oder eine profilierte Fläche oder eine Kombination hiervon. In einer weiteren Ausführungsform weist die strukturierte Oberfläche zur Strukturierung eine Beschichtung, z.B. eine Diamantschicht oder eine Fremdmateriallage wie z.B. Leder oder Gummi auf. Geeignet als Beschichtung oder Fremdmateriallage sind alle Materialen, die den Reibwert (Reibungskoeffizient) verbessern. Die strukturierte Oberfläche führt zu einer verbesserten Haftreibung, so dass ein rutschen der Spannvorrichtung im geschlossenen Zustand effektiv vermieden wird. Durch die strukturierte Oberfläche im Klemmbereich wird ein vorhersehbarer Reibwert zwischen erfindungsgemäßer Spannvorrichtung und Rohrschuss erzeugt.

Es sind auch Kombinationen der beiden Ausführungsformen möglich, insbesondere können verschiedene Klemmplatten einer Klemmvorrichtung eine verschiedene Ausführungsform einer strukturierten Oberfläche haben

In einer bevorzugten Ausführungsform weist jede Klemmvorrichtung vier Klemmflächen auf, bevorzugt zwei Klemmflächen an der oberen Klemmbacke und zwei Klemmflächen an der unteren Klemmbacke, wobei sich die Klemmflächen paarweise gegenüberliegen. Bei der Verwendung von vier Klemmflächen pro Seite erfolgt eine gute Verteilung der Klemmkraft, so dass keine Verformung auf dem Rohrschuss erfolgt.

Die erfindungsgemäße Spannvorrichtung weist in einer Ausführungsform eine Einstellhilfe auf, die an der Verbindungsstange angeordnet ist und mit der die Position der Klemmverbinder entlang der Schwenkachse des Gelenks eingestellt wird, bevorzugt ist die eine Halterung z.B. ein Anschlussblech mit einer Stellschraube. Die Einstellhilfe wird eingesetzt, wenn die erfindungsgemäße Spannvorrichtung für Rohrschüsse verschiedener Durchmesser verwendet werden soll. Damit das Stahlblech des Rohrschusses zwischen den Klemmbacken zu liegen kommt, muss die Klemmvorrichtung entsprechend zur Biegung des Rohrschusses ausgerichtet werden. Dieses kann manuell bei Montage der Spannvorrichtung am Rohrschuss erfolgen. Da die Neigung der Klemmvorrichtung in Abhängigkeit vom Rohrdurchmesser aber immer gleich ist, kann die Neigung entsprechend vor der Montage eingestellt werden. Durch die Einstellhilfe, z.B. durch Verstellen der Stellschraube wird die Klemmvorrichtung im gewünschten Neigungswinkel fixiert. Die Montage der erfindungsgemäßen Spannvorrichtung kann in diesem Fall schneller erfolgen, da kein manuelles justieren am Rohrschuss notwendig ist. Die Einstellhilfe erlaube eine sichere und reproduzierbare Montage der Spannvorrichtung, und stellt eine Arbeitserleichterung für den Anwender dar. Optional ist an der Klemmvorrichtung zusätzlich mindestens ein Hebel montiert, bevorzugt lösbar montiert, mit dem die Klemmvorrichtung zusätzlich manuell ausgerichtet werden kann. Der Hebel kann z.B. in eine entsprechende Öffnung in der Klemmvorrichtung eingeschraubt oder eingesteckt werden und nach dem Einstellen wieder abgenommen werden. In seiner einfachsten Form ist der Hebel als Stange oder Griff ausgebildet. Der Hebel wird bevorzugt in Kombination mit der Einstellhilfe verwendet, um ein Nachjustieren am Rohrschuss zu ermöglichen.

Die erfindungsgemäße Spannvorrichtung weist optional eine Montagehilfe auf. Die erfindungsgemäße Spannvorrichtung wird so an den Rohrschuss montiert bis die Rückwand des Grundgestells der Klemmvorrichtung an der Stirnseite des Rohrschusses anliegt. Zentrale Aufgabe der Montagehilfe ist es, die Spannvorrichtung parallel zum Rohrschuss auszurichten. Hierdurch wird ein Verklemmen der beiden Klemmvorrichtungen und somit ein Rutschen der Spannvorrichtung oder die Beschädigung des Rohrschusses verhindert. Die Montagehilfe ist beispielweise als Ansatzblech ausgeführt und an der Rückwand des Grundgestells seitlich befestigt.

Die Spannvorrichtung weist optional ein Anschlagmittel auf, dass an der Verbindungstange befestigt ist. Das Anschlagmittel ist beispielsweise als Öse oder Abschweißblech mit Anschweißaugen an der Oberseite der Verbindungsstange ausgeführt, in die z.B. ein Kranhaken eingreifen kann. Mit dem Anschlagmittel kann die erfindungsgemäße Spannvorrichtung unmittelbar mit dem Tragmittel des Hebezeugs, z.B. einem Kranhaken, verbunden werden. Die erfindungsgemäße Spannvorrichtung kann so leichter zum Einsatzort transportiert und abtransportiert werden.

Die erfindungsgemäße Spannvorrichtung wird zur Verbindung und Sicherung der Plattenenden von Großrohren und Großrohrschüssen mit einem Rohrdurchmesser von 4,5 m bis 10 m, bevorzugt 6 m bis 10 m verwendet. Die Rohre weisen bei üblicher Bauweise eine Wanddicke von 30 mm bis 250 mm, bevorzugt 35 bis 200 mm, besonders bevorzugt 50 mm bis 170 mm auf. Großrohre und Großrohschüsse mit einem Durchmesser von 6 m bis 10 m haben bevorzugt eine Wanddicke von 50 mm bis 170 mm. Ein Großrohrschuss hat üblicherweise eine Länge von 2 m bis 4,2 m. Entsprechend hat die erfindungsgemäße Spannvorrichtung eine Verbindungsstange eine Länge von bevorzugt 0,5 m bis 1,5 m um die Plattenenden sicher verbinden zu können.

Alle Bestandteile der erfindungsgemäßen Spannvorrichtung sind bevorzugt aus Stahl. Die Stahlgüte ist bevorzugt möglichst hoch, um das Eigengewicht der Spannvorrichtung zu minimieren.

Die erfindungsgemäße Spannvorrichtung wird kraftschlüssig mit den Enden des offenen Rohrschusses verbunden. Anders als die angeschweißten Heftverbinder, bei denen eine stoffschlüssige Verbindung erfolgt, wird durch die kraftschlüssige Verbindung das Material des Rohrschusses nicht beeinträchtigt.

Die erfindungsgemäße Spannvorrichtung ist anders als die bekannten Heftnähte oder Hilfsverbinder (Knaggen) mobil, wiederverwendbar und variabel einsetzbar. Sie kann schnell und sicher an Rohrschüssen verschiedener Durchmesser montiert werden, um die Heftnaht zu entlasten und im Falle des Versagens der Heftnaht diese zu ersetzen. Die erfindungsgemäße Spannvorrichtung wird als Verbinder auf beiden Seiten der Heftnaht fixiert und somit die Enden des Rohrschusses verbindet. Die Verbindungsstange ist hierbei gelenkig gelagert, damit mehrere Durchmesser abgedeckt werden können. Durch verschiedene Anschlagpunkte ist eine variable Montage der Knagge in horizontaler oder vertikaler Position möglich. Die erfindungsgemäße Spannvorrichtung passt sich durch ihre Konstruktion an verschiedene Durchmesser und Wandstärken an. Durch die Ausführung mit den Klemmbacken, insbesondere mit strukturierter Oberfläche, ist ein System gegeben, welches nicht rutscht und keinen größeren Schaden an den Rohren hinterlässt.

Die erfindungsgemäße Spannvorrichtung bietet eine Reihe von Vorteilen:
- Die erfindungsgemäße Spannvorrichtung passt sich an jeden Durchmesser und jede Wanddicke an.
- Sie minimiert die Spannung in der Heftnaht nachweislich, so dass eine einfache Heftung ohne angeschweißte Hilfsverbinder für den Transport zwischen den Arbeitsstationen ausreicht.
- Sie ermögliche eine schnelle Montage im Gegensatz zum zeitlichen Aufwand des Knaggenschweißens.
- Sie sichert den Rohrschuss beim Versagen der Heftnaht.
- Sie ist wiederverwendbar, wodurch Kosten gespart werden.
- Es ist kein Einschweißen von Hilfsverbindern (Knaggenschweißen) notwendig, so dass keine thermische Belastung des Rohrschusses durch das Einschweißen entsteht.

Gegenstand der Erfindung ist weiterhin ein Verfahren zur Herstellung eines längsnahtgeschweißter Großrohrschuss mit einem Durchmesser von mindestens 4,5 m, bevorzugt 6 m bis 10 m gemäß Patentanspruch 12.

Das erfindungsgemäße Verfahren umfasst die Schritte:
a) Bereitstellen eines Stahlblechs, das aus einem verschleißfesten, härtbaren Stahl besteht,
b) Biegen/Formen des Stahlblechs zu einer rohrförmigen Vorform, bei der zwei Längskanten des gebogenen Stahlblechs einander gegenüberliegend positioniert sind und zwischen sich eine Schweißfuge begrenzen;
c) Verbinden der beiden Enden des gebogenen Stahlblechs mit einer erfindungsgemäßen Spannvorrichtung gemäß einem der Patentansprüche 1 bis 11 unter Positionieren der Spannvorrichtung an der Außenseite des Rohrschusses, so dass das Stahlblech zwischen den Klemmbacken zu liegen kommt, schließen der Klemmvorrichtung durch Betätigen der Klemmelement bis die Klemmflächen am Stahlblech anliegen und eine kraftschlüssige Verbindung vorliegt,
d) Anbringen einer Heftnaht in der Schweißfuge,
e) Verschweißen der einander gegenüberliegend angeordneten, die Schweißfuge begrenzenden Längskanten unter Ausbildung einer die Schweißfuge schließenden Schweißnaht;
f) ggf. Entfernen der Heftnaht,
g) Entfernen der Spannvorrichtung unter lösen des Klemmelements, so dass die Klemmbacken das Stahlblech freigegen und abnehmen der Spannvorrichtung vom Rohrschuss.

Die Schweißnahtvorbereitung erfolgt beispielsweise mittels spanabhebender oder schleifender Verfahren, wie Drehen, Fräsen oder anderer Verfahren und sichert eine Reinigung der Schweißnaht. Zudem wird die Passgenauigkeit der Nahtstellen verbessert. Bei der Großrohrherstellung werden Schweißnahtvorbereitungen an der Innennaht vor dem Biegen am Rohblech durchgeführt. Die Längskante für die spätere Schweißnaht des Großrohrs wird am ebenen Rohblech vorbehandelt. Der Blechtafelzuschnitt wird dann rundgebogen, die Innennaht verschweißt und erst dann erfolgt die Schweißnahtvorbereitung für die Außennaht.

Die erfindungsgemäße Spannvorrichtung wird zur Verbindung der Enden eines rundgebogenen Stahlblechs mit einem Durchmesser von mindestens 4,5 m, bevorzugt 4,5 bis 10 m bei der Herstellung eines längsnahtgeschweißten Großrohrschusses verwendet.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Ausführungsform einer erfindungsgemäßen Spannvorrichtung,
- Fig.2: eine Klemmvorrichtung ohne Verbindungsstange und
- Fig. 3: eine erfindungsgemäße Spannvorrichtung an einem Stahlblech montiert.

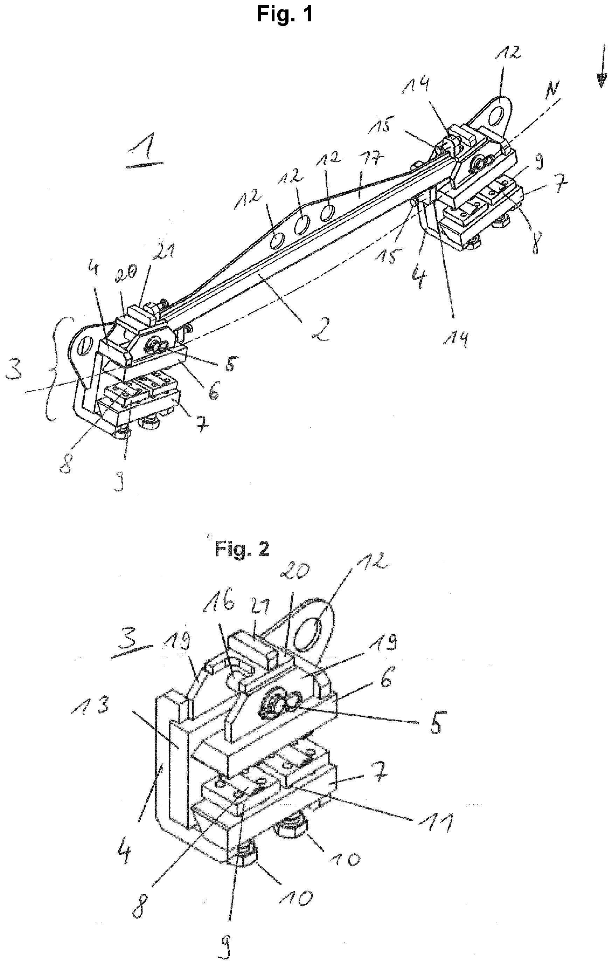

Figur 1 zeigt eine Ausführungsform einer erfindungsgemäßen Spannvorrichtung 1 in einer perspektivischen Ansicht. Der Pfeil zeigt von oben nach unten. Die Spannvorrichtung 1 hat eine starre Verbindungstange 2, die als gerader Stab ausgeführt ist. An der Oberseite weist die Verbindungsstange 2 ein Anschlagmittel auf, das zum Anschlagen der Spannvorrichtung 1 an einem Hebezeug dient. Das Anschlagmittel ist als gerade Platte mit drei Öffnungen in Form eines Anschweißblechs 17 mit drei Anschweißaugen 12 ausgeführt, in die z.B. ein Kranhaken eingreifen kann. An beiden Enden der Verbindungsstange 2 ist jeweils eine Klemmvorrichtung 3 angeordnet. Auch an beiden Klemmvorrichtungen ist jeweils ein Anschweißauge 12 befestigt. Zur Erleichterung der Positionierung der Klemmvorrichtung 3 sind an der Verbindungsstange 2 an beiden Enden jeweils zwei Einstellhilfen angeordnet. Die Einstellhilfen weisen jeweils eine Halterung 14 und eine Stellschraube 15 auf.

Die Klemmvorrichtungen sind hier baulich gleich ausgeführt, wobei lediglich einzelne Elemente spiegelbildlich angeordnet sind. Die Klemmvorrichtung 3 weist ein Grundgestell auf. Das Grundgestell hat eine Verstärkungsrippe 4, die hier in Form eines Cs ausgebildet ist, eine Rückwand 13 und eine obere Klemmbacke 6. An der Verstärkungsrippe 4 des Grundgestells ist im oberen Bereich das Gelenk 5 befestigt, über das die Verbindungsstange 2 mit der Klemmvorrichtung 3 gelenkig verbunden ist. Das Gelenk 5 ist als Drehgelenk ausgeführt. Unterhalb des Gelenks 5 ist die obere Klemmbacke 6 angeordnet, die hier Teil des Grundgestells ist und somit feststeht. Nach unten setzt sich das Grundgestell über eine Rückwand 13 fort, die als Anschlagfläche für den Rohschuss dient und die Klemmvorrichtung in einer Richtung begrenzt. Das Grundgestell weist unterhalb der Rückwand 13 einen Aufnahme 14 für die untere Klemmbacke 7 auf. Die untere Klemmbacke 7 ist hier als verstellbares Klemmelement ausgeführt. Die gestrichelte Linie N zeigt die Neigung der beiden Klemmvorrichtungen angepasst an die Krümmung des Rohrschusses.

Figur 2 zeigt einen Klemmverbinder 3 ohne Verbindungsstange. Das Grundgestell des Klemmverbinders weist auf der Oberseite eine Befestigungsvorrichtung für das Gelenk 5 auf. Die Achse 16 des Gelenks ist zwischen zwei Seitenblechen 19 angeordnet. Nach oben wird des Gelenk durch ein Deckblech 20 abgedeckt. Unterhalb des Gelenks befindet sich die obere Klemmbacke 6, die Bestandteil des Grundgestells ist. An der Rückseite erstreckt sich die Rückwand 13, die nach unten durch die Aufnahme 14 für die untere Klemmbacke 7 begrenzt wird. Die untere Klemmbacke 7 weist zwei Klemmelemente auf, die in der Klemmbacke 7 gehaltert sind und Teil der Klemmbacke sind. Die Klemmelemente werden durch einen Schraubstift 11 und eine daran befestigte Klemmplatte 9 gebildet. Auf der Klemmplatte 9 ist die Klemmfläche 8 befestigt. Die Klemmelemente können durch Drehen der Schraubstifte 11 in ihrer Position verändert werden. Wenn die Spannschraube 10 angezogen wird, bewegt sich die Klemmplatte 9 in Richtung der oberen Klemmbacke 6 und kann so einen zwischen den Klemmbacken befindlichen Rohrschuss einklemmen. Wenn die Spannschraube 10 gelöst wird, bewegt sich die Klemmplatte 9 entsprechend nach unten und gibt einen zwischen den Klemmbacken eingeklemmten Rohrschuss wieder frei. An der Oberseite der Klemmvorrichtung ist zusätzlich ein Anschweißauge 12 als Anschlagmittel angebracht. Auf dem Deckblech 20 des Gelenks ist ein Anschlag 21 für die Einstellhilfe angeordnet.

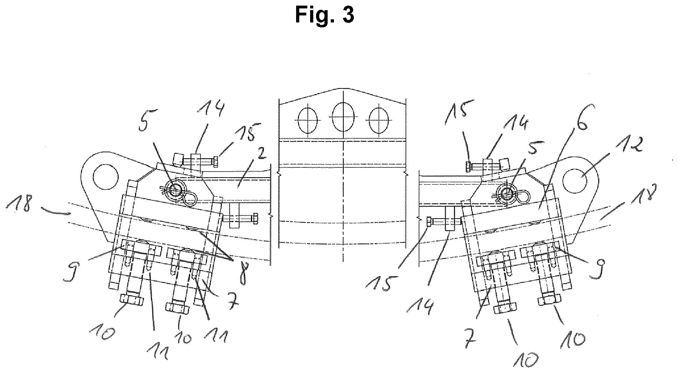

Figur 3 zeigt schematisch eine an einem Rohrschuss 18 befestigte erfindungsgemäße Spannvorrichtung in einer Schnittansicht. Der Rohrschuss 18 ist zwischen den Klemmflächen 8 eingeklemmt, von denen jeweils zwei an der oberen Klemmbacke 6 starr befestigt sind und zwei verstellbar an der unteren Klemmbacke 7 angeordnet sind. Die Klemmflächen 8 der untern Klemmbacke 7 sind auf den Klemmplatten 9 befestigt. Die beiden Klemmvorrichtungen 3 sind entsprechend der Krümmung des Rohrschusses geneigt. Sie sind durch die Einstellhilfen in ihrer Position fixiert. Hierzu ist die Stellschraube 15, in der Halterung 14 so eingestellt, dass sie ein Verschwenken der Klemmvorrichtungen nach innen verhindert.

### Bezugszeichenliste

| | |
|---|---|
| Spannvorrichtung | 1 |
| Verbindungsstange | 2 |
| Klemmvorrichtung | 3 |
| Verstärkungsrippe (Grundgestell) | 4 |
| Gelenk | 5 |
| obere Klemmbacke (Grundgestell) | 6 |
| untere Klemmbacke(Grundgestell) | 7 |
| Klemmfläche | 8 |
| Klemmplatte | 9 |
| Spannschraube | 10 |
| Schraubstift | 11 |
| Einstellhilfe | 12 |
| Rückwand (Grundgestell) | 13 |
| Halterung Einstellhilfe | 14 |
| Stellschraube | 15 |
| Achse (Gelenk) | 16 |
| Anschweißblech | 17 |
| Rohrschuss | 18 |
| Seitenbleche (Gelenk) | 19 |
| Deckblech (Gelenk) | 20 |
| Anschlag Einstellhilfe | 21 |

## Patentansprüche

1. Spannvorrichtung (1) zur temporären Verbindung von zwei Enden eines Großrohrschusses aufweisend mindestens zwei Verbindungsvorrichtungen und eine starre Verbindungsstange (2), wobei die Verbindungsvorrichtungen an den Enden der Verbindungsstange (2) angeordnet sind, wobei die Verbindungsvorrichtung eine Klemmvorrichtung (3) ist, die aufweist
- ein Grundgestell,
- ein Gelenk (5), das Grundgestell und Verbindungsstange (2) verbindet,
- mindestens zwei einander gegenüberliegende Klemmbacken (6,7), die unterhalb des Gelenks (5) angeordnet sind, wobei jede Klemmbacke (6,7) mindestens eine Klemmfläche (8) aufweist, die im geschlossenen Zustand der Spannvorrichtung am Rohrschuss anliegt,
wobei
- mindestens eine Klemmbacke (6,7) mindestens eine Klemmelement aufweist, das einen Verstellmechanismus zur Veränderung der Position hat, so dass das Klemmelement verstellbar ist,
- das Klemmelement die mindestens eine Klemmfläche (8) aufweist, und
- an beiden Enden der Verbindungsstange (2) jeweils mindestens eine Klemmvorrichtung (3) gelenkig gelagert ist und die Klemmvorrichtung (3) jeweils so ausgerichtet ist, dass die Öffnungen zweier verschiedener Klemmvorrichtungen zwischen den Klemmbacken (6, 7) in die gleiche Richtung zeigen und die Öffnungen zweier verschiedener Klemmvorrichtungen auf der gleichen Seite der Verbindungsstange positioniert sind.

2. Spannvorrichtung (1) gemäß Patentanspruch 1, **dadurch gekennzeichnet, dass** die Klemmvorrichtung (3) eine obere Klemmbacke (6) und eine untere Klemmbacke (7) aufweist und die obere Klemmbacke (6) Teil des Grundgestells ist und starr mit diesem verbunden ist, wobei der Querschnitt der Klemmvorrichtung (3) C-förmig oder U-Profil-förmig ist.

3. Spannvorrichtung (1) gemäß Patentanspruch 1 oder 2, **dadurch gekennzeichnet, dass** die Klemmvorrichtung (3) eine obere Klemmbacke (6) und eine untere Klemmbacke (7) aufweist und dass in der unteren Klemmbacke (7) das mindestens eine verstellbare Klemmelement angeordnet ist.

4. Spannvorrichtung (1) gemäß einem der vorhergehenden Patentansprüche, **dadurch gekennzeichnet, dass** das Klemmelement ein Schraubstift (11) mit Klemmplatte (9) ist, wobei auf der Klemmplatte (9) die mindestens eine Klemmfläche (8) befestigt ist und wobei die Klemmplatte (9) eine konvexe Platte, eine gebogene Platte mit kreisabschnittförmigem Querschnitt, eine gewölbte Platte, eine gewellte Platte, eine Platte, die mehrere Erhebungen aus der Ebene heraus hat oder eine ebene Platte, ist, bevorzugt eine runde, gebogene Platte, in Form eines Zylinderschnitts oder eine ebene Platte.

5. Spannvorrichtung (1) gemäß einem der vorhergehenden Patentansprüche, **dadurch gekennzeichnet, dass** die Klemmfläche (8) zumindest teilweise eine strukturierte Oberfläche aufweist, bevorzugt die gesamte Klemmfläche eine strukturierte Oberfläche hat.

6. Spannvorrichtung (1) gemäß Patentanspruch 5 falls abhängig von Patentanspruch 4, **dadurch gekennzeichnet, dass** die strukturierte Oberfläche aus dem gleichen Material, wie die Klemmplatte (9) besteht und eine aufgeraute Fläche oder eine profilierte Fläche oder eine Kombination hiervon ist.

7. Spannvorrichtung (1) gemäß Patentanspruch 5 falls abhängig von Patentanspruch 4, **dadurch gekennzeichnet, dass** die strukturierte Oberfläche eine Beschichtung oder ein Fremdmaterial ist, dass auf die Oberfläche der Klemmplatte (9) aufgebracht ist.

8. Spannvorrichtung (1) gemäß einem der vorhergehenden Patentansprüche, **dadurch gekennzeichnet, dass** jede Klemmvorrichtung (3) vier Klemmflächen (8) aufweist, bevorzugt zwei Klemmflächen (8) an der oberen Klemmbacke (6) und zwei Klemmflächen (8) an der unteren Klemmbacke (7).

9. Spannvorrichtung (1) gemäß einem der vorhergehenden Patentansprüche, **dadurch gekennzeichnet, dass** die Klemmfläche (8) eine runde, gebogene Form, in Form eines Zylinderschnitts, eine konvexe Form, eine gewellte Form, gezackte Form oder ebene Form hat und die Klemmfläche (8) mehrere auf einem Kreisbogen angeordnete Flächenanteile hat, die im geschlossenen Zustand am Rohrschuss anliegen.

10. Spannvorrichtung (1) gemäß einem der vorhergehenden Patentansprüche, **dadurch gekennzeichnet, dass** die Spannvorrichtung (1) eine Einstellhilfe aufweist, die an der Verbindungsstange (2) angeordnet ist und mit der die Position der Klemmvorrichtungen (3) entlang der Schwenkachse des Gelenks eingestellt werden kann, bevorzugt ist die Einstellhilfe eine Stellschraube (15) mit Halterung (14) und Anschlag (21).

11. Spannvorrichtung (1) gemäß einem der vorhergehenden Patentansprüche, **dadurch gekennzeichnet, dass** die Spannvorrichtung (1) ein Anschlagmittel (17, 12) aufweist und das Anschlagmittel (17,12) an der Verbindungstange (2) und/oder an der Klemmvorrichtung (3) befestigt ist.

12. Verfahren zur Herstellung eines längsnahtgeschweißter Großrohrschuss mit einem Durchmesser von mindestens 4,5 m, bevorzugt 6 m bis 10 m umfassend die Schritte:
a) Bereitstellen eines Stahlblechs, das aus einem verschleißfesten, härtbaren Stahl besteht,
b) Biegen/Formen des Stahlblechs zu einer rohrförmigen Vorform, bei der zwei Längskanten des gebogenen Stahlblechs einander gegenüberliegend positioniert sind und zwischen sich eine Schweißfuge begrenzen;
c) Verbinden der beiden Enden des gebogenen Stahlblechs mit einer Spannvorrichtung gemäß einem der Patentansprüche 1 bis 11 unter Positionieren der Spannvorrichtung an der Außenseite des Rohrschusses, so dass das Stahlblech zwischen den Klemmbacken zu liegen kommt, schließen der Klemmvorrichtung durch Betätigen der Klemmelement bis die Klemmflächen am Stahlblech anliegen und eine kraftschlüssige Verbindung vorliegt,
d) Anbringen einer Heftnaht in der Schweißfuge,
e) Verschweißen der einander gegenüberliegend angeordneten, die Schweißfuge begrenzenden Längskanten unter Ausbildung einer die Schweißfuge schließenden Schweißnaht;
f) ggf. Entfernen der Heftnaht,
g) Entfernen der Spannvorrichtung unter lösen des Klemmelements, so dass die Klemmbacken das Stahlblech freigegen und abnehmen der Spannvorrichtung vom Rohrschuss.

## Claims

1. Clamping apparatus (1) for the temporary connection of two ends of a large tube section, having at least two connecting devices and a rigid connecting bar (2), the connecting devices being arranged at the ends of the connecting bar (2), wherein the connecting device is a clamping device (3) which has:
- a basic frame,
- a joint (5), which connects the basic frame and the connecting bar (2),
- at least two clamping jaws (6, 7) opposite one another, which are arranged below the joint (5), each clamping jaw (6, 7) having at least one clamping surface (8), which bears against the tube section in the closed state of the clamping apparatus,
wherein
- at least one clamping jaw (6, 7) has at least one clamping element which has a mechanism for changing the position, so that the clamping element is adjustable,
- the clamping element has the at least one clamping surface (8), and
- at both ends of the connecting bar (2) at least one respective clamping device (3) is mounted in an articulated manner and the clamping device (3) is respectively aligned such that the openings of two different clamping devices face in the same direction between the clamping jaws (6, 7) and the openings of two different clamping devices are positioned on the same side of the connecting bar.

2. Clamping apparatus (1) according to Patent Claim 1, **characterized in that** the clamping device (3) has an upper clamping jaw (6) and a lower clamping jaw (7), and the upper clamping jaw (6) is part of the basic frame and rigidly connected thereto, the cross section of the clamping device (3) being C-shaped or in the shape of a U-profile.

3. Clamping apparatus (1) according to Patent Claim 1 or 2, **characterized in that** the clamping device (3) has an upper clamping jaw (6) and a lower clamping jaw (7), and **in that** the at least one adjustable clamping element is arranged in the lower clamping jaw (7).

4. Clamping apparatus (1) according to one of the preceding patent claims, **characterized in that** the clamping element is a screw pin (11) with a clamping plate (9), the at least one clamping surface (8) being fastened to the clamping plate (9) and the clamping plate (9) being a convex plate, a curved plate with a cross section in the form of a circular segment, a domed plate, a wavy plate, a plate which has a plurality of elevations from the plane, or a flat plate, preferably being a round, curved plate, in the form of a cylinder section or a flat plate.

5. Clamping apparatus (1) according to one of the preceding patent claims, **characterized in that** the clamping surface (8) at least partially has a structured surface, and preferably the entire clamping surface has a structured surface.

6. Clamping apparatus (1) according to Patent Claim 5 if dependent on Patent Claim 4, **characterized in that** the structured surface consists of the same material as the clamping plate (9) and is a roughened surface or a profiled surface or a combination thereof.

7. Clamping apparatus (1) according to Patent Claim 5 if dependent on Patent Claim 4, **characterized in that** the structured surface is a coating or an external material which is applied to the surface of the clamping plate (9).

8. Clamping apparatus (1) according to one of the preceding patent claims, **characterized in that** each clamping device (3) has four clamping surfaces (8), preferably two clamping surfaces (8) on the upper clamping jaw (6) and two clamping surfaces (8) on the lower clamping jaw (7).

9. Clamping apparatus (1) according to one of the preceding patent claims, **characterized in that** the clamping surface (8) has a round, curved form, in the form of a cylinder section, a convex form, a wavy form, serrated form or flat form, and the clamping surface (8) has a plurality of surface portions which are arranged on a circular arc and bear against the tube section in the closed state.

10. Clamping apparatus (1) according to one of the preceding patent claims, **characterized in that** the clamping apparatus (1) has a setting aid, which is arranged on the connecting bar (2) and by way of which the position of the clamping devices (3) along the pivot axis of the joint can be set; preferably, the setting aid is an adjusting screw (15) with a mount (14) and a stop (21).

11. Clamping apparatus (1) according to one of the preceding patent claims, **characterized in that** the clamping apparatus (1) has a stop means (17, 12) and the stop means (17, 12) is fastened to the connecting bar (2) and/or to the clamping device (3).

12. Method for producing a longitudinal-seam-welded large tube section with a diameter of at least 4.5 m, preferably 6 m to 10 m, comprising the following steps:
a) providing a steel sheet, which consists of a wear-resistant, hardenable steel,
b) curving/shaping the steel sheet to form a tubular preform, in which two longitudinal edges of the curved steel sheet are positioned opposite one another and between them delimit a welded joint,
c) connecting the two ends of the curved steel sheet to a clamping apparatus according to one of Patent Claims 1 to 11 by positioning the clamping apparatus on the outer side of the tube section, with the result that the steel sheet comes to lie between the clamping jaws, closing the clamping device by actuating the clamping element until the clamping surfaces bear against the steel sheet and a force-fitting connection is present,
d) applying a tack-weld seam in the welded joint,
e) welding together the longitudinal edges, which are arranged opposite one another and delimit the welded joint, to form a weld seam which closes the welded joint,
f) optionally removing the tack-weld seam,
g) removing the clamping apparatus by detaching the clamping element, with the result that the clamping jaws release the steel sheet, and removing the clamping device from the tube section.

## Revendications

1. Dispositif de serrage (1) pour relier temporairement deux extrémités d'un segment de tube de grand diamètre, présentant au moins deux dispositifs de liaison et une tige de liaison rigide (2), les dispositifs de liaison étant agencés aux extrémités de la tige de liaison (2), le dispositif de liaison étant un dispositif de blocage (3), qui présente
- un châssis de base,
- une articulation (5) qui relie le châssis de base et la tige de liaison (2),
- au moins deux mâchoires de blocage (6, 7) opposées l'une à l'autre qui sont agencées en dessous de l'articulation (5), chaque mâchoire de blocage (6, 7) présentant au moins une surface de blocage (8) qui, à l'état fermé du dispositif de serrage, s'applique contre le segment de tube,
- au moins une mâchoire de blocage (6, 7) présentant au moins un élément de blocage qui a un mécanisme de réglage pour changer la position, de telle sorte que l'élément de blocage est réglable,
- l'élément de blocage présentant l'au moins une surface de blocage (8), et
- au moins un dispositif de blocage (3) étant monté de manière articulée respectivement aux deux extrémité de la tige de liaison (2) et le dispositif de blocage (3) étant orienté de telle sorte que les ouvertures de deux dispositifs de serrage différents pointent dans la même direction entre les mâchoires de blocage (6, 7) et les ouvertures de deux dispositifs de serrage différents sont positionnées du même côté de la tige de liaison.

2. Dispositif de serrage (1) selon la revendication 1, **caractérisé en ce que** le dispositif de blocage (3) présente une mâchoire de blocage supérieure (6) et une mâchoire de blocage inférieure (7), et la mâchoire de blocage supérieure (6) fait partie du châssis de base et est reliée de manière rigide à celui-ci, la section transversale du dispositif de blocage (3) étant en forme de C ou en forme de profilé en U.

3. Dispositif de serrage (1) selon la revendication 1 ou 2, **caractérisé en ce que** le dispositif de blocage (3) présente une mâchoire de blocage supérieure (6) et une mâchoire de blocage inférieure (7) et **en ce que** l'au moins un élément de blocage réglable est agencé dans la mâchoire de blocage inférieure (7).

4. Dispositif de serrage (1) selon l'une quelconque des revendications précédentes, **caractérisé en ce que** l'élément de blocage est une tige filetée (11) avec une plaque de blocage (9), l'au moins une surface de blocage (8) étant fixée sur la plaque de blocage (9) et la plaque de blocage (9) étant une plaque convexe, une plaque incurvée avec une section transversale en forme de segment de cercle, une plaque bombée, une plaque ondulée, une plaque qui a plusieurs bosses hors du plan ou une plaque plane, de préférence une plaque incurvée ronde, en forme de coupe de cylindre ou une plaque plane.

5. Dispositif de serrage (1) selon l'une quelconque des revendications précédentes, **caractérisé en ce que** la surface de blocage (8) présente au moins partiellement une surface structurée, de préférence toute la surface de blocage a une surface structurée.

6. Dispositif de serrage (1) selon la revendication 5, dans la mesure où elle dépend de la revendication 4, **caractérisé en ce que** la surface structurée est constituée du même matériau que la plaque de blocage (9) et est une surface rugosifiée ou une surface profilée ou une combinaison de celles-ci.

7. Dispositif de serrage (1) selon la revendication 5, dans la mesure où elle dépend de la revendication 4, **caractérisé en ce que** la surface structurée est un revêtement ou un matériau étranger appliqué sur la surface de la plaque de blocage (9).

8. Dispositif de serrage (1) selon l'une quelconque des revendications précédentes, **caractérisé en ce que** chaque dispositif de blocage (3) présente quatre surfaces de blocage (8), de préférence deux surfaces de blocage (8) sur la mâchoire de blocage supérieure (6) et deux surfaces de blocage (8) sur la mâchoire de blocage inférieure (7).

9. Dispositif de serrage (1) selon l'une quelconque des revendications précédentes, **caractérisé en ce que** la surface de blocage (8) a une forme ronde, incurvée, en forme de coupe de cylindre, une forme convexe, une forme ondulée, une forme dentelée ou une forme plane, et la surface de blocage (8) a plusieurs parties de surface agencées en arc de cercle qui, à l'état fermé, s'appliquent contre le segment de tube.

10. Dispositif de serrage (1) selon l'une quelconque des revendications précédentes, **caractérisé en ce que** le dispositif de serrage (1) présente une aide au réglage qui est agencée sur la tige de liaison (2) et avec laquelle la position des dispositifs de serrage (3) peut être réglée le long de l'axe de pivotement de l'articulation, l'aide au réglage étant de préférence une vis de réglage (15) avec support (14) et butée (21).

11. Dispositif de serrage (1) selon l'une quelconque des revendications précédentes, **caractérisé en ce que** le dispositif de serrage (1) présente un moyen de butée (17, 12) et le moyen de butée (17, 12) est fixé à la tige de liaison (2) et/ou au dispositif de blocage (3).

12. Procédé de fabrication d'un segment de tube de grand diamètre soudé longitudinalement, d'un diamètre d'au moins 4,5 m, de préférence de 6 m à 10 m, comprenant les étapes suivantes :
a) la fourniture d'une tôle d'acier constituée d'un acier durcissable résistant à l'usure,
b) le pliage/la mise en forme de la tôle d'acier en une préforme tubulaire dans laquelle deux bords longitudinaux de la tôle d'acier pliée sont positionnés à l'opposé l'un de l'autre et délimitent entre eux un joint de soudure ;
c) la liaison des deux extrémités de la tôle d'acier pliée à un dispositif de serrage selon l'une quelconque des revendications 1 à 11, en positionnant le dispositif de serrage sur le côté extérieur du segment de tube, de telle sorte que la tôle d'acier vienne se placer entre les mâchoires de blocage, la fermeture du dispositif de serrage en actionnant les éléments de blocage jusqu'à ce que les surfaces de blocage s'appliquent contre la tôle d'acier et qu'il y ait une liaison par adhérence,
d) la disposition d'une soudure de pointage dans le joint de soudure,
e) le soudage des bords longitudinaux agencés à l'opposé l'un de l'autre, délimitant le joint de soudure, avec formation d'un cordon de soudure fermant le joint de soudure,
f) éventuellement le retrait de la soudure de pointage,
g) le retrait du dispositif de serrage en desserrant l'élément de blocage, de telle sorte que les mâchoires de blocage libèrent la tôle d'acier et l'enlèvement du dispositif de serrage du segment de tube.
